# EUROPEAN PATENT APPLICATION

(11) **EP 4 507 273 A1**
(43) Date of publication of application: **12.02.2025**
(21) Application number: 23799732.5
(22) Date of filing: 04.05.2023
(51) Int. Cl.: H04L 65/75, H04L 65/40, H04L 65/80, H04L 67/131, H04L 67/289

(54) **METHOD AND DEVICE FOR REAL-TIME MEDIA TRANSMISSION IN MOBILE COMMUNICATION SYSTEM**

(30) Priority: 04.05.2022 KR 20220055296
(71) Applicant: Samsung Electronics Co., Ltd., Suwon-si, Gyeonggi-do 16677 (KR)
(72) Inventor: LEE, Hakju, Suwon-si Gyeonggi-do 16677 (KR); YANG, Hyunkoo, Suwon-si Gyeonggi-do 16677 (KR)
(74) Representative: Gulde & Partner
(86) International application number: PCT/KR2023/006175
(87) International publication number: WO 2023/214851

(57) **Abstract**

The disclosure relates to a 5G or 6G communication system for supporting a higher data transmission rate. A method of operating a real-time media communication (RTC) application function (AF), according to an embodiment of the present disclosure, may comprise the steps of: receiving, from a service provider, control information related to a service; determining, on the basis of the control information, initial values of workflow split for the service; transmitting information related to the workflow split to at least one of user equipment (UE) and an RTC application server (AS); modifying the workflow split on the basis of delay information related to processing of the service; and transmitting information related to the modified workflow split to at least one of the UE and AS.

## Description

### [Technical Field]

The disclosure relates to a method and a device for real-time media transmission in a mobile communication system and, particularly, to a method and a device supporting split rendering, wherein overall processes are split and transmitted by a UE and an edge server.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Solution to Problem]

In accordance with an aspect of the disclosure, a method for operating a real-time media communication (RTC) application function (AF) may include receiving, from a service provider, control information related to a service, determining, based on the control information, an initial value of workflow split for the service, transmitting information related to the workflow split to at least one of a user equipment (UE) and a real-time media communication (RTC) application server (AS), changing the workflow split, based on delay information related to processing of the service, and transmitting information related to the changed workflow split to at least one of the UE and the AS.

### [Advantageous Effects of Invention]

According to a device and a method according to various embodiments of the disclosure, it is possible to use an edge server in a 5G network to transmit augmented reality (AR)/3D media requiring a high level of processing at a very low level of latency by configuring workflow splits adaptively to the channel and terminal environment.

Advantageous effects obtainable from the disclosure may not be limited to the above-mentioned effects, and other effects which are not mentioned may be clearly understood from the following descriptions by those skilled in the art to which the disclosure pertains.

### [Brief Description of Drawings]

FIG. 1 illustrates a split rendering structure, in which media transmission is performed using an edge server;
FIG. 2 illustrates a 5G media streaming (5GMS) structure;
FIG. 3 illustrates a split rendering structure for real-time media transmission according to an embodiment of the disclosure;
FIGS. 4 and 5 illustrate information delivered via an R1 interface according to an embodiment of the disclosure;
FIG. 6 illustrates additional information delivered via an R5 interface according to an embodiment of the disclosure;
FIG. 7 illustrates additional information delivered via an R6 interface according to an embodiment of the disclosure;
FIG. 8 illustrates additional information delivered via an R7 interface according to an embodiment of the disclosure;
FIG. 9 illustrates additional information delivered via an R10 interface according to an embodiment of the disclosure;
FIG. 10 illustrates a flowchart of media and control information according to an embodiment of the disclosure;
FIG. 11 is a flowchart illustrating step 8 of FIG. 10 in more detail;
FIG. 12 is a flowchart illustrating step 16 of FIG. 10 in more detail;.
FIG. 13 illustrates a structure of a UE according to embodiments of the disclosure.
FIG. 14 illustrates a structure of an edge server according to an embodiment of the disclosure.

### [Best Mode for Carrying out the Invention]

A method for operating a real-time media communication (RTC) application function (AF) according to an embodiment of the disclosure may include receiving, from a service provider, control information related to a service, determining, based on the control information, an initial value of workflow split for the service, transmitting information related to the workflow split to at least one of a user equipment (UE) and a real-time media communication (RTC) application server (AS), changing the workflow split, based on delay information related to processing of the service, and transmitting information related to the changed workflow split to at least one of the UE and the AS.

In an embodiment of the disclosure, control information required for the service may include the number of processes required for the service, identification information of the process, and QoS information required for each process.

In an embodiment of the disclosure, control information required for the service may include the number of process sets required for the service, identification information of the process set, identification information of processes included in the process set, and QoS information required for each process set.

In an embodiment of the disclosure, information related to the workflow split may include an initial value for the workflow split, and wherein the determining of the initial value for the workflow split for the service, based on the control information, may include receiving information related to processing capabilities of the UE, determining a maximum number of processes that can be processed by the UE, based on the information related to the processing capabilities of the UE, and determining a process to be processed by the UE and a process to be processed by the AS, based on the maximum number of processes that the UE can process.

In an embodiment of the disclosure, the changing of the workflow split, based on the delay information related to processing of the service, may include, in case that a delay value measured by the UE, a delay value measured by the AS, and a target delay value are greater than or equal to the target delay value, re-determining a process to be processed by the UE and a process to be processed by the AS.

A method for operating a real-time media communication (RTC) application server (AS) according to an embodiment of the disclosure may include receiving information related to workflow split from an RTC application function (AF), processing media, based on the information related to the workflow split, receiving changed information related to the workflow split, and processing the media, based on the changed information.

In an embodiment of the disclosure, the information related to the workflow split may include an initial value for the workflow split determined based on the processing capabilities of the UE, and wherein the changed information related to the workflow split is determined based on a delay value measured by the UE, a delay value measured by the AS, and a target delay value.

In an embodiment of the disclosure, the method may further include transmitting the information related to the workflow split to the user equipment (UE).

A real-time media communication (RTC) application function (AF) according to an embodiment of the disclosure may include a transceiver, and a controller connected to the transceiver, wherein the controller is configured to receive, from a service provider, control information related to a service, determine, based on the control information, an initial value of workflow split for the service, transmit information related to the workflow split to at least one of a user equipment (UE) and a real-time media communication (RTC) application server (AS), change the workflow split, based on delay information related to processing of the service, and transmit information related to the changed workflow split to at least one of the UE and the AS.

In an embodiment of the disclosure, control information required for the service may include the number of processes required for the service, identification information of the process, and QoS information required for each process.

In an embodiment of the disclosure, control information required for the service may include the number of process sets required for the service, identification information of the process set, identification information of processes included in the process set, and QoS information required for each process set.

In an embodiment of the disclosure, the information related to the workflow split may include an initial value for the workflow split, and wherein the controller is configured to receive information related to processing capabilities of the UE, determine a maximum number of processes that can be processed by the UE, based on the information related to the processing capabilities of the UE, and determine a process to be processed by the UE and a process to be processed by the AS, based on the maximum number of processes that the UE can process.

In an embodiment of the disclosure, the controller is configured to, in case that a delay value measured by the UE, a delay value measured by the AS, and a target delay value are greater than or equal to the target delay value, re-determine a process to be processed by the UE and a process to be processed by the AS.

A real-time media communication (RTC) application server (AS) according to an embodiment may include a transceiver, and a controller connected to the transceiver, wherein the controller is configured to receive information related to workflow split from an RTC application function (AF), process media, based on the information related to the workflow split, receive changed information related to the workflow split, and process the media, based on the changed information.

In an embodiment of the disclosure, the information related to the workflow split may include an initial value for the workflow split determined based on the processing capabilities of the UE, and wherein the changed information related to the workflow split is determined based on a delay value measured by the UE, a delay value measured by the AS, and a target delay value.

### [Mode for carrying out Invention]

Hereinafter, exemplary embodiments of the disclosure will be described in detail with reference to the accompanying drawings. It should be noted that, in the accompanying drawings, the same or like elements are designated by the same or like reference signs as much as possible. Also, a detailed description of known functions or configurations that may make the subject matter of the disclosure unnecessarily unclear will be omitted.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The following detailed description of embodiments of the disclosure is mainly directed to New RAN (NR) as a radio access network and Packet Core (5G system or 5G core network or next generation core (NG Core)) as a core network in the 5G mobile communication standards specified by the 3rd generation partnership project (3GPP) that is a mobile communication standardization group, but based on determinations by those skilled in the art, the main idea of the disclosure may be applied to other communication systems having similar backgrounds through some modifications without significantly departing from the scope of the disclosure.

In the following description, some of terms and names defined in the 3GPP standards (standards for 5G, NR, LTE, or similar systems) may be used for the sake of descriptive convenience. However, the disclosure is not limited by these terms and names, and may be applied in the same way to systems that conform other standards.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used herein, and other terms referring to subjects having equivalent technical meanings may be used.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) or eNode B, and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5 ms, and may also requires a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

The recent spread of 5G communication systems has increased the demand for services such as high-capacity media such as 3D media and real-time media transmission. In addition, new types of UEs that are not existing smartphones, such as AR glasses, are emerging as a way to effectively display 3D media. In the case of these UEs, lightweight design is essential so that users do not feel uncomfortable when actually wearing them. However, 3D media requires very complex rendering processing compared to existing 2D methods, and this has the problem of resulting in high battery consumption.

As an alternative solution to this problem, there is a method of using an edge server. For example, by using an edge server that is capable of more complex computations compared to AR glasses, the rendering process can be split between a UE and an edge server, and effective 3D media rendering can be achieved while reducing the power consumption of the UE. This rendering method using a split process is called split rendering, and the series of processes required is called a workflow.

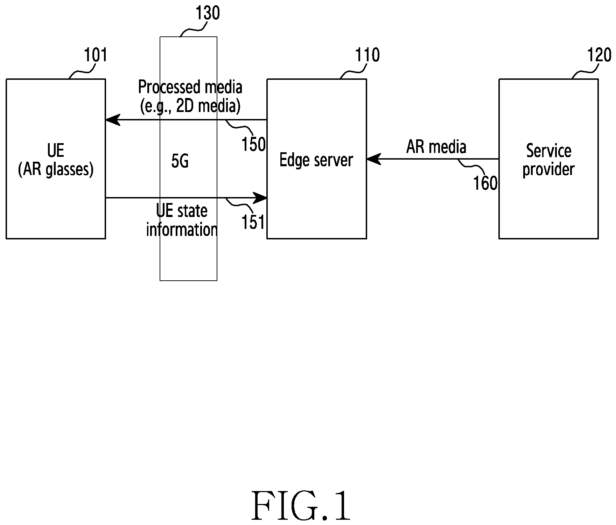

FIG. 1 illustrates a split rendering structure, in which media transmission is performed using an edge server.

When a service is requested by running an app installed on a UE 101, such as AR glasses, the service provider 120 starts transmitting an AR media service such as 3D. In this case, the service provider 120 first provides media to a nearby edge server 110 where the UE is located to reduce latency, and this is called content hosting (indicated by reference numeral 160). The edge server 110 converts the original media (for example, AR media) into processed media that can be processed by the UE through primary processing, and transfers the processed media to the UE 101 through a 5G network 130 (indicated by reference numeral 150). Additionally, for the processing required by the edge server 110, the UE 101 may provide required state information through a reverse channel (indicated by reference numeral 151). In this case, the UE state information includes, for example, the current location of the UE and information on the direction in which the user is facing.

3GPP supports a 5G media streaming structure (5GMS), in which media transmission to a UE by using an edge server, including split rendering, is performed through the 5G network.

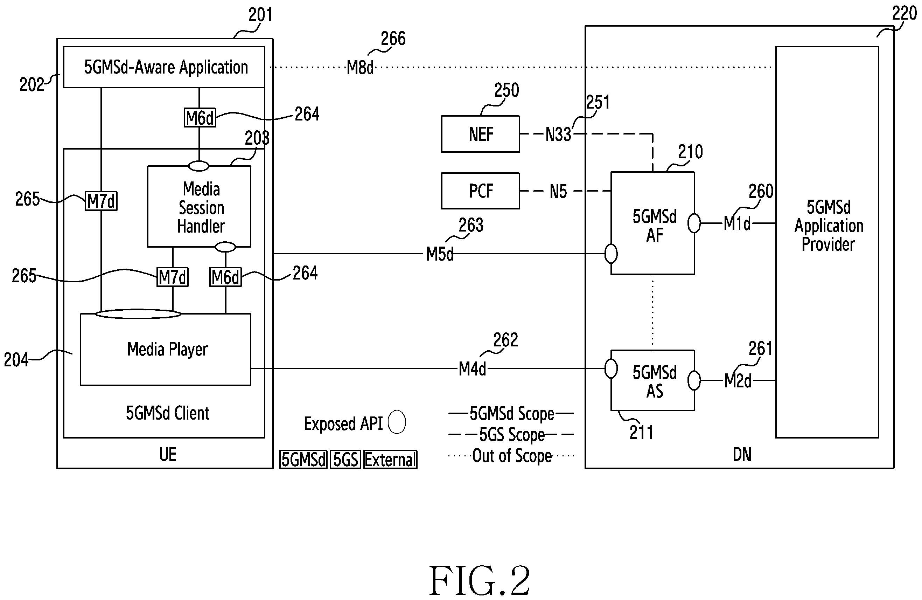

FIG. 2 illustrates a 5G media streaming (5GMS) structure.

FIG. 2 a detailed diagram of the 5GMS structure and shows more detailed entities for a UE 201, edge servers 210 and 211, and a service provider 220. The UE 201 may include a user application 202, a media player 204 that performs actual media reception and UE processes (decoding, etc.), and a media session handler 203 that transmits and receives control information (information required for session setup and maintenance) for a transmission path. The edge server may include a 5G media streaming for downlink application server (5GMSd AS) 211 that performs actual media transmission and processing, and a 5GMSd application function (AF) 210 that is responsible for transmitting and receiving control information to and from the UE.

Each of the entities is connected through an interface shown in FIG. 2, and each interface has parameters defined for the information to be transmitted and received. Paths through which media is actually delivered include an M2d path 261 used by the service provider 220 for delivery to the edge server, an M4d path 262 used for delivery of media processed by the edge server to the UE, and an M7d path 265 used for delivery of media processed by the UE to the user application 202. Paths through which control information is delivered include an M1d path 260 between the service provider 220 and the edge server, an M5d path 263 for performing communication of control information between the AF and the UE, and an M6d path 264 for delivery of control information within the UE. A path 266 may be used for a user to communicate with the service provider in order to identify, for example, information on services that the user is able to receive by running the user application 202 of the UE, and a PCF/NEF 250 and a transmission path 251 may be used to receive policies for quality of service (QoS).

The 5GMS structure defined in FIG. 2 is a basic structure that enables edge server-based media transmission through a 5G network, and it is a structure that enables basic split rendering as well as general 2D media transmission, but it is difficult to apply the structure to real-time media transmission that requires low latency.

First, according to this structure, the user application is located only in the UE, making it impossible to access processes performed in the edge server. This approach allows workflow split in a predefined manner, but has the disadvantage of not being able to respond to changes in the channel environment and UE state that change in real time. In other words, in case that the processing capacity of the UE is reduced due to another app running during an AR video call on a UE such as AR glasses, when trying to change the workflow split between the UE and the edge server, the UE notifies a remote service provider of this situation, and the service provider has to perform a content hosting process on the edge server again according to the changed method, causing latency in this process.

Second, in the case of the split rendering method, the latency occurring along the entire path includes a delay processed by the edge server and the UE, respectively, a delay occurring in a wireless channel path, and a delay occurring in other wired networks. However, the existing structure does not define how to report the actual processing delay that occurs in the UE through the control information path. In this case, while this may not be a problem for 2D/3D movie streaming services that require latencies in the hundreds of ms, it may be a problem for scenarios that require transmission latencies in the tens of ms, such as real-time 3D video calls.

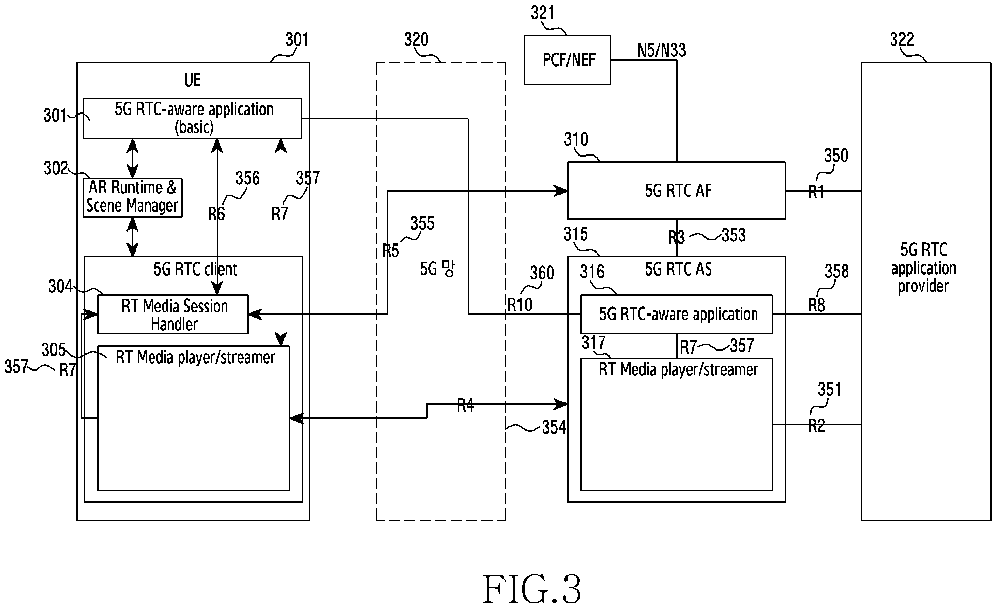

FIG. 3 illustrates a split rendering structure for real-time media transmission according to an embodiment of the disclosure.

FIG. 3 is basically similar to or has the same structure as the existing FIG. 2, and hereinafter, description of the same content will be omitted and only the necessary content will be described.

When a service is started, first, control information for content hosting is delivered between a service provider 322 and an AF 310 (350). In this case, in order to adaptively change the workflow split, the service provider 322 provides the type and number of required processes, QoS information required for each process, etc. to the AF 310 in advance. The required QoS information may provide the calculation amount for each process in the form of floating point operation per seconds (FLOPS), or may include information such as expected latency depending on the process processing speed.

When content hosting is performed and the requested content is delivered from the service provider 322 to an AS 315, a user application 316 is run within an AS 315. The user application 316 running within the AS 315 is connected to a user application 302 of a UE 301 via a separate interface 360. This interface 360 may be used as a path through which latency information and workflow split results measured by the UE 301 in the future is notified of. The user applications 316 and 302 running on the AS 315 and the UE 301 may be the same type of application, but considering that the processing capacity of the edge server is usually superior to that of the UE 301, the user application 302 of the UE may only perform the function of processing basic user input, and the user application 316 of the AS may perform functions such as more complex 3D processing.

The user applications 302 running in the UE 301 and the AS 315 each are connected to the media player/streamer via an R7 interface 357. The R7 interface 357 serves to deliver the actual measured latency during processing operations in the AS 315 and the UE 301. In this case, the latency measured by the UE 301 includes not only a delay of the processing processed by the UE 301 but also a delay consumed in the wireless channel delivered through the 5G network.

In terms of control information, when content hosting for the service is completed, the AF 310 in the edge server delivers target latency information and separate QoS policy to the UE 301 via an R5 interface 355. The target latency information is delivered to the user application 302 of the UE via an R6 interface 356 as a total latency target required to support the entire service, and may be used as a target value for future QoS management.

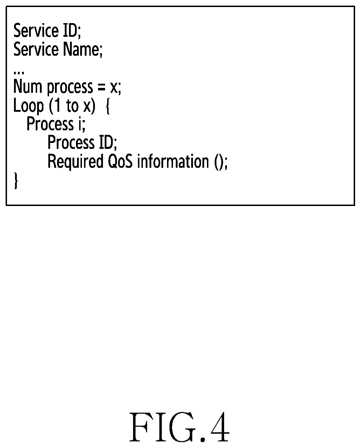

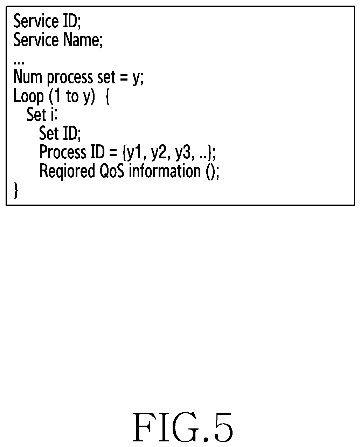

FIGS. 4 and 5 illustrate an example of information delivered via an R1 interface 350 according to an embodiment of the disclosure.

Referring to FIG. 4, the information includes a service ID and service name, as well as the total number of processes as described above, and a process ID and required QoS information for each individual process. In this case, the required QoS information may be expressed in the form of information about the actual calculation amount, or in the form of processing speed or processing latency according to processing capability, as described above.

Referring to FIG. 5, instead of providing required QoS information for individual processes, a method of providing a set of several available workflow splits in advance is shown. In FIG. 5, y sets of workflow splits are defined, and for each set of workflow splits, processes included therein and required QoS information for the entire set are shown. The required QoS information is the same as the information described in FIG. 4.

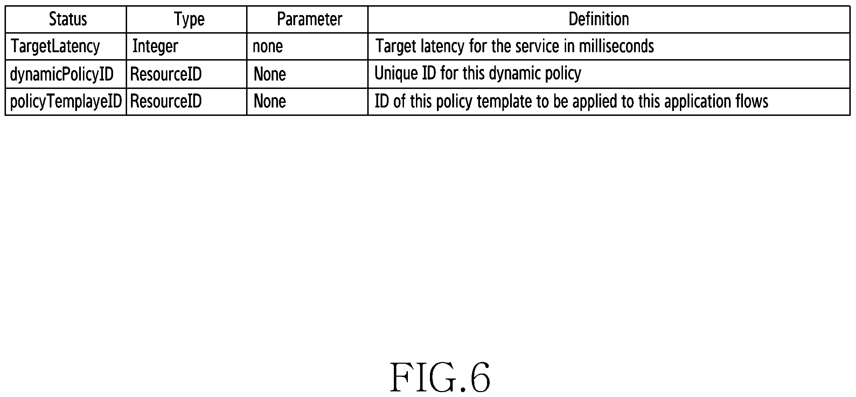

FIG. 6 illustrates additional information delivered via an R5 interface 355 according to an embodiment of the disclosure.

TargetLatency parameter may be delivered as an integer value in milliseconds to indicate a total latency target that the service requires to perform through the entire process. In addition, a dynamic policy other than latency for the service may be delivered, and the dynamic policy may include data rate, jitter, required bandwidth, etc. for each individual stream that configures the service. The dynamic policy may include a dynamicPolicyID that distinguishes the individual policies and a policyTemplateID that contains detailed policy information.

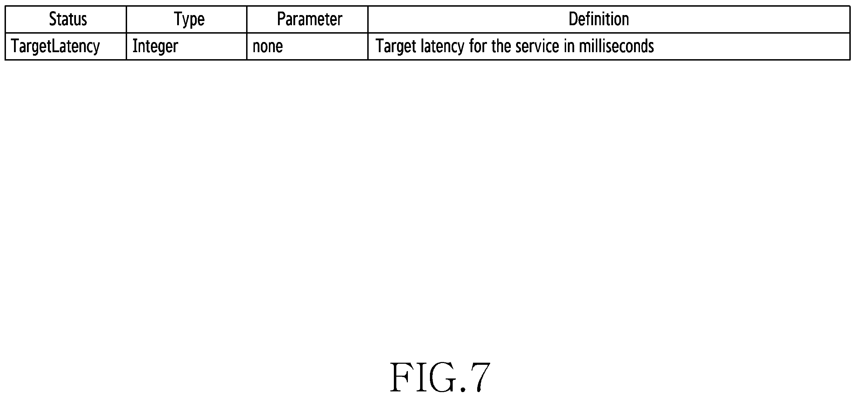

FIG. 7 illustrates additional information delivered via an R6 interface according to an embodiment of the disclosure.

As described above, the R6 interface 356 is a path for delivering control information between a user application and a media session handler, and plays the role of forwarding the previously delivered TargetLatency information to the UE and the AS user application. The transmitted TargetLatency information is the same as that described in FIG. 6.

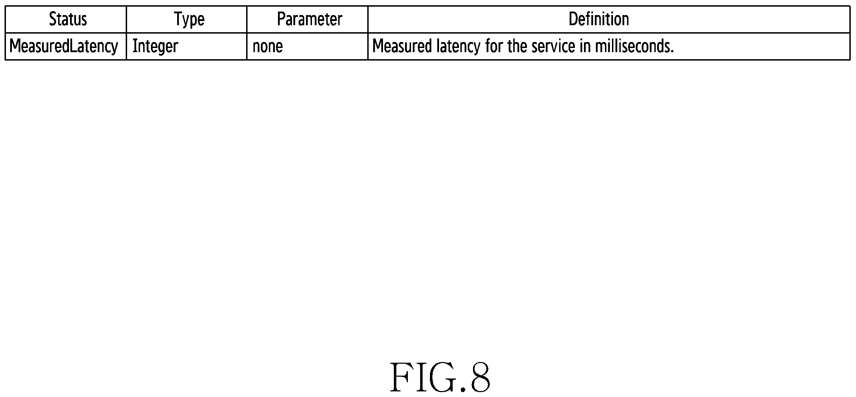

FIG. 8 illustrates additional information delivered via an R7 interface according to an embodiment of the disclosure.

The R7 interface 357 is a path for delivering media-related information between the media player/streamer and the user application, measuring a delay for processing performed by the UE and the AS and delivering the measured delay to the user application. As described above, the delay measured by the UE includes a wireless channel delay, and the measured latency may be expressed as an integer value in milliseconds units.

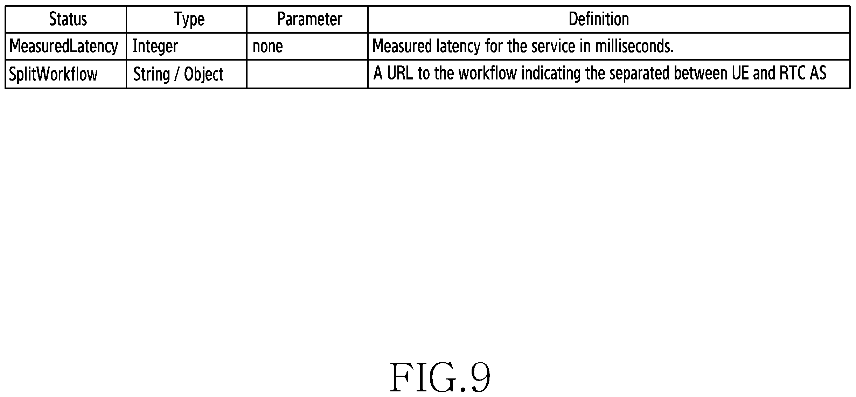

FIG. 9 illustrates additional information delivered via an R10 interface according to an embodiment of the disclosure.

The R10 interface 360 is a path through which required information is transmitted and received between the UE and the user application running in the AS, and through which MeasuredLatency information measured by the UE is delivered to the AS and the workflow split result determined by the AS is delivered to the UE.

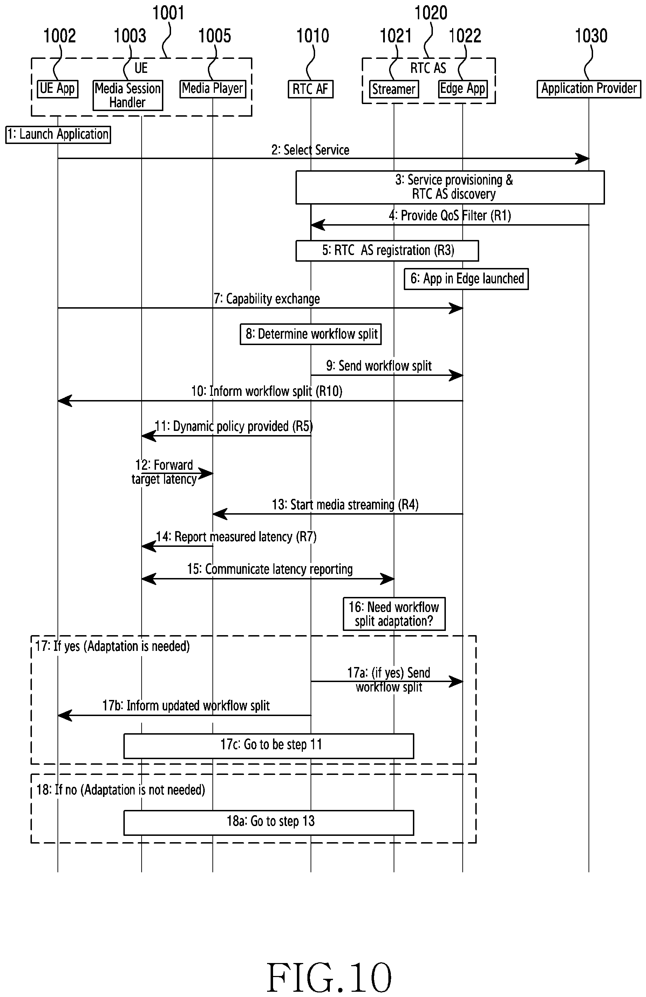

FIG. 10 illustrates a flowchart of media and control information according to an embodiment of the disclosure.

When a user executes a user application 1002 of a UE (step 1) and selects a media service to be performed (step 2), a service provider 1030 provides control information to an AF 1010 to initiate the service (step 3). In this case, the information delivered via the R1 interface includes the information described in the embodiment of FIG. 4 or FIG. 5. Thereafter, the service provider 1030 delivers a QoS filter to the AF 1010 to ensure the required QoS (step 4), and the edge server performs a procedure to select and register an optimal AF 1010 and AS 1020 to achieve such QoS (step 5). Here, the procedure for selecting and registering the AF 1010 and the AS 1020 may be performed according to conventional procedures. _When the AS 1020 is selected, the user application 1022 is subsequently installed and run within the AS 1020 (step 6), and then initial information about the processing capabilities that the UE can perform is exchanged through a path between the UE 1001 and the user application in the AS 1020 (step 7). The AF 1010 determines a workflow split initialization value for service initiation, based on the received UE processing capabilities (step 8), which will be described in more detail later. The determined workflow split initial value is delivered to the AS 1020 and the UE 1001, respectively (step 9, step 10). In addition, the AF 1010 delivers the dynamics policy initial value and the target latency initial value to the UE 1001, and these values are utilized as initial information for processing configuration in the media player 1003 within the UE. The process described above completes the initial setting for the actual media to be delivered.

Thereafter, the actual media is delivered from an AS streamer 1021 to a media player 1005 of the UE 1001 (step 13), and the media player 1005 performs processing such as decoding and expresses the rendered screen on the display of the UE 1001. The latency generated in this process is measured and delivered to the media session handler 1003, and QoS information including the MeasuredLatency information described in FIG. 8 is reported to the AF 1010 of the edge server (step 15). The reported QoS information (including measured latency) is then used by the AF 1010 to determine if the workflow split needs to be changed again, and if so, to reconfigure the workflow split (step 16). In case that a change is required, the changed workflow split information is notified of to the AS 1020 and the user application on the UE 1001 (step 17), and then the procedure returns to step 11 to update new dynamic policy information according to the workflow split. When there are no workflow split changes required, the procedure returns to transmitting the next media streaming packet, as shown in step 18. In the process of streaming media through the above process, the UE continuously measures the latency and adaptively updates the workflow split based on the measured latency information to successfully transmit real-time media.

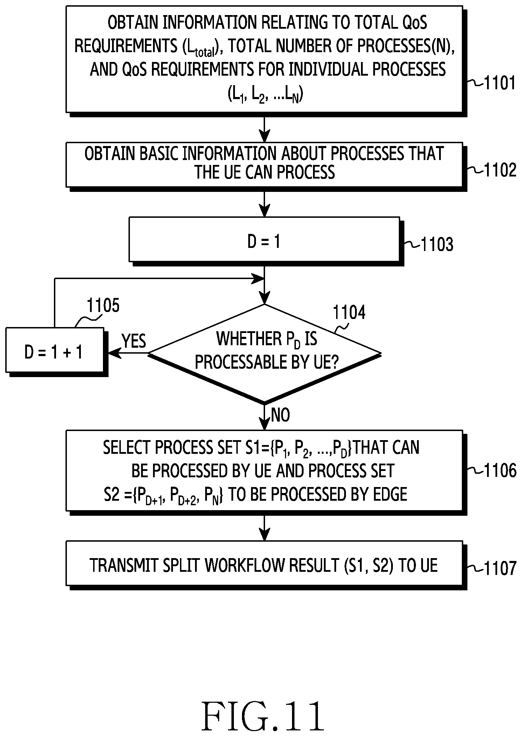

FIG. 11 is a flowchart illustrating step 8 of FIG. 10 in more detail.

The AS receives total QoS requirements, the total number of processes, and the QoS requirements for individual processes from the service provider (operation 1101). In addition, from step 7 of FIG. 10, the AS receives basic information about the processes that the UE can process (operation 1102) and determines the initial value of the workflow split based on this information. Here, according to the determination method, a number D of processes that the UE can process is selected from the overall processes P₁, P₂, ..., P_{N} (it is assumed that the workflow order for the actual rendering is performed in reverse order, i.e., N, N-1, ..., 1). The selection method is to determine whether the UE can process sequentially from P1 (operation 1103, 1104) and select the maximum number of processes that the UE can process. Based on a value of the selected D, a set S1 of processes to be performed finally by the UE and a set S2 of processes to be performed by the AS are selected (operation 1106), and then the selected S1 and S2 are delivered to the UE and the AS, respectively (operation 1107).

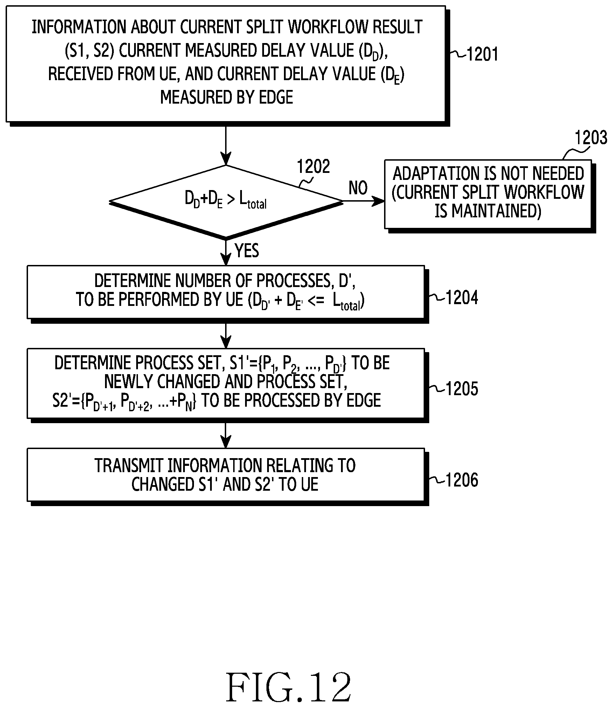

FIG. 12 is a flowchart illustrating step 16 of FIG. 10 in more detail.

Based on the current workflow split results (S1, S2), a current measurement delay value D_{D} received from a UE, and a processing delay value D_{E} measured within the edge AS (operation 1201), a total latency (D_{D}+D_{E}) is compared to a target latency Lₜₒₜₐₗ (operation 1202). In case that the total latency is less than the target latency, it is determined that the workflow split does not need to be updated (operation 1203) and the current workflow split is maintained. Otherwise, the number of processes D' that should be performed by the UE is newly calculated, and according to the method for determining D', a value of D' is determined by determining whether the total delay does not exceed the target delay when the UE processes sequentially from P₁ as described in FIG. 11 (operation 1204). Based on the re-modified value of D', the set S1' and the set S2' are determined (operation 1205), and the determined S1' and S2' are delivered to the UE and the AS for notification of the workflow split change.

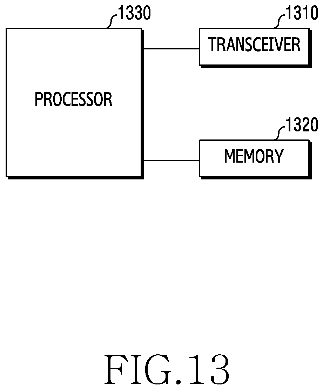

FIG. 13 illustrates a structure of a UE according to an embodiment of the disclosure.

As illustrated in FIG. 13, a UE of the disclosure may include a transceiver 1310, a memory 1320, and a processor 1330. The processor 1330 and the transceiver 1310, and the memory 1320 may operate according to the above-described communication methods of the UE. However, components of the UE are not limited to the above-described example. For example, the UE may include a larger or smaller number of components than the above-described components. In addition, the processor 1330, the transceiver 1310, and the memory 1320 may be implemented in the form of a single chip.

The transceiver 1310 refers to a UE receiver and a UE transmitter as a whole, and may transmit/receive signals with base stations or network entities. The signals transmitted/received with the base station may include control information and data. To this end, the transceiver 1310 may include an RF transmitter configured to up-convert and amplify the frequency of transmitted signals, an RF receiver configured to low-noise-amplify received signals and down-convert the frequency thereof, and the like. However, this is only an embodiment of the transceiver 1310, and the components of the transceiver 1310 are not limited to the RF transmitter and the RF receiver.

Also, the transceiver 1310 may include wired/wireless transceivers, and may include various components for transmitting/receiving signals.

In addition, the transceiver 1310 may receive signals through a radio channel, output the same to the processor 1330, and transmit signals output from the processor 1330 through the radio channel.

Furthermore, the transceiver 1310 may receive communication signals, output same to a processor, and transmit signals output from the processor to a network entity through a wired/wireless network.

The memory 1320 may store programs and data necessary for operations of the UE. In addition, the storage 1320 may store control information or data included in signals acquired by the UE. The memory 1320 may include storage media such as a ROM, a RAM, a hard disk, a CD-ROM, and a DVD, or a combination of storage media.

The processor 1330 may control a series of processes such that the UE can operate according to the above-described embodiments. The processor 1330 may include one or more processors. For example, the processor 1330 may include a communication processor (CP) which performs control for communication and an application processor (AP) which controls upper layers such as application programs.

FIG. 13 illustrates a structure of an edge server according to an embodiment of the disclosure.

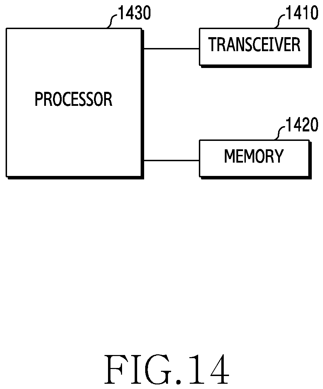

As illustrated in FIG. 14, an edge server of the disclosure may include a transceiver 1410, a memory 1420, and a processor 1430. The processor 1430 and the transceiver 1410, and the memory 1420 of a network entity may operate according to the above-described communication methods of the edge server. However, components of the edge server are not limited to the above-described example. For example, the edge server may include a larger or smaller number of components than the above-described components.

The transceiver 1410 refers to an edge server receiver and an edge server transmitter as a whole, and may transmit/receive signals with UEs or other network entities. The transmitted/received signals may include control information and data. To this end, the transceiver 1410 may include an RF transmitter configured to up-convert and amplify the frequency of transmitted signals, an RF receiver configured to low-noise-amplify received signals and down-convert the frequency thereof, and the like. However, this is only an embodiment of the transceiver 1410, and the components of the transceiver 1410 are not limited to the RF transmitter and the RF receiver. The transceiver 1410 may include wired/wireless transceivers, and may include various components for transmitting/receiving signals.

In addition, the transceiver 1410 may receive signals through a communication channel (e.g., a radio channel), output the same to the processor 1430, and transmit signals output from the processor 1430 through the communication channel.

Furthermore, the transceiver 1410 may receive communication signals, output same to a processor, and transmit signals output from the processor to UEs or network entities through a wired/wireless network.

The memory 1420 may store programs and data necessary for operations of the edge server. In addition, the memory 1420 may store control information or data included in signals acquired by the edge server. The memory 1420 may include storage media such as a ROM, a RAM, a hard disk, a CD-ROM, and a DVD, or a combination of storage media.

The processor 1430 may control a series of processes such that the edge server can operate according to the above-described embodiments. The processor 1430 may include one or more processors.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the embodiments of the disclosure, an element included in the disclosure is expressed in the singular or the plural according to presented embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

In the drawings in which methods of the disclosure are described, the order of the description does not always correspond to the order in which steps are performed, and the order relationship between the steps may be changed or the steps may be performed in parallel. In addition, in the drawings in which the embodiments of the disclosure are described, some of the elements may be omitted and only the other elements may be included without departing from the essential spirit and scope of the disclosure.

In the embodiments of the disclosure, some or all of the contents of each embodiment may be implemented in combination without departing from the essential spirit and scope of the disclosure.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented.

## Claims

1. A method for operating a real-time media communication (RTC) application function (AF), the method comprising:
receiving, from a service provider, control information related to a service;
based on the control information, determining an initial value of workflow split for the service;
transmitting information related to the workflow split to at least one of a user equipment (UE) and a real-time media communication (RTC) application server (AS); changing the workflow split, based on delay information related to processing of the service; and
transmitting information related to the changed workflow split to at least one of the UE and the AS.

2. The method of claim 1, wherein control information required for the service comprises the number of processes required for the service, identification information of the process, and QoS information required for each process.

3. The method of claim 1, wherein control information required for the service comprises the number of process sets required for the service, identification information of the process set, identification information of processes included in the process set, and QoS information required for each process set.

4. The method of claim 1, wherein the information related to the workflow split comprises an initial value for the workflow split, and
wherein the determining of the initial value for the workflow split for the service, based on the control information, comprises:
receiving information related to processing capabilities of the UE;
determining a maximum number of processes that can be processed by the UE, based on the information related to the processing capabilities of the UE; and
determining a process to be processed by the UE and a process to be processed by the AS, based on the maximum number of processes that the UE can process.

5. The method of claim 1, wherein the changing of the workflow split, based on the delay information related to processing of the service, comprises, in case that a delay value measured by the UE, a delay value measured by the AS, and a target delay value are greater than or equal to the target delay value, re-determining a process to be processed by the UE and a process to be processed by the AS.

6. A method for operating a real-time media communication (RTC) application server (AS), the method comprising:
receiving information related to workflow split from an RTC application function (AF);
processing media, based on the information related to the workflow split;
receiving changed information related to the workflow split; and
processing the media, based on the changed information.

7. The method of claim 1, wherein the information related to the workflow split comprises an initial value for the workflow split determined based on the processing capabilities of the UE, and
wherein the changed information related to the workflow split is determined based on a delay value measured by the UE, a delay value measured by the AS, and a target delay value.

8. The method of claim 1, further comprising transmitting the information related to the workflow split to the user equipment (UE).

9. A real-time media communication (RTC) application function (AF) comprising:
a transceiver; and
a controller connected to the transceiver,
wherein the controller is configured to:
receive, from a service provider, control information related to a service;
based on the control information, determine an initial value of workflow split for the service;
transmit information related to the workflow split to at least one of a user equipment (UE) and a real-time media communication (RTC) application server (AS);
change the workflow split, based on delay information related to processing of the service; and
transmit information related to the changed workflow split to at least one of the UE and the AS..

10. The RTC AF of claim 9, wherein control information required for the service comprises the number of processes required for the service, identification information of the process, and QoS information required for each process.

11. The RTC AF of claim 9, wherein control information required for the service comprises the number of process sets required for the service, identification information of the process set, identification information of processes included in the process set, and QoS information required for each process set.

12. The RTC AF of claim 9, wherein the information related to the workflow split comprises an initial value for the workflow split, and
wherein the controller is configured to:
receive information related to processing capabilities of the UE;
determine a maximum number of processes that can be processed by the UE, based on the information related to the processing capabilities of the UE; and
determine a process to be processed by the UE and a process to be processed by the AS, based on the maximum number of processes that the UE can process.

13. The RTC AF of claim 9, wherein the controller is configured to, in case that a delay value measured by the UE, a delay value measured by the AS, and a target delay value are greater than or equal to the target delay value, re-determine a process to be processed by the UE and a process to be processed by the AS.

14. A real-time media communication (RTC) application server (AS) comprising:
a transceiver; and
a controller connected to the transceiver,
wherein the controller is configured to:
receive information related to workflow split from an RTC application function (AF);
process media, based on the information related to the workflow split;
receive changed information related to the workflow split; and
process the media, based on the changed information.

15. The RTC AS of claim 14, wherein the information related to the workflow split comprises an initial value for the workflow split determined based on the processing capabilities of the UE, and
wherein the changed information related to the workflow split is determined based on a delay value measured by the UE, a delay value measured by the AS, and a target delay value.
